# EUROPEAN PATENT APPLICATION

(11) **EP 3 188 539 A1**
(43) Date of publication of application: **05.07.2017**
(21) Application number: 15834862.3
(22) Date of filing: 15.07.2015
(51) Int. Cl.: H04W 28/08, H04W 92/14

(54) **COMMUNICATION APPARATUS, COMMUNICATION SYSTEM, CONTROL METHOD, AND NONTEMPORARY COMPUTER READABLE MEDIUM ON WHICH COMMUNICATION PROGRAM HAS BEEN STORED**

(30) Priority: 27.08.2014 JP 2014172116
(71) Applicant: NEC Corporation, Tokyo 108-8001 (JP)
(72) Inventor: WATANABE, Tomohiro, Tokyo 108-8001 (JP); NAKATA, Atsushi, Tokyo 108-8001 (JP)
(74) Representative: Mathys & Squire LLP
(86) International application number: PCT/JP2015/003569
(87) International publication number: WO 2016/031123

(57) **Abstract**

Provided is a method of operating, when a load of a base station is changed, based on a load of a backhaul of another base station. An aspect of the present invention includes, in a communication system including a first backhaul (4) between a base station (100) and a core network (3) connected to the base station (100) and a second backhaul (5) between an adjacent base station (101) and the core network (3) connected to the adjacent base station (101), a calculation unit (10) configured to calculate a load of the second backhaul (5) when a load of the base station (100) is changed; and a determination unit (20) configured to determine as to whether or not the load of the base station (100) is changed based on a result of the calculation by the calculation unit (10).

## Description

### Technical Field

A disclosure of the present specification relates to a communication device, a communication system, a control method, and a communication program in a wireless communication network.

### Background Art

An example of a cellular communication system is an LTE (Long Term Evolution) system. A SON (Self Organizing Network) technique in which base stations autonomously make adjustments is applied to the LTE system. One suggested method of the SON techniques is a method of adjusting a base station parameter that defines a coverage based on load information transmitted and received between base stations in order to level loads of the base stations.

For example, Patent Literature 1 discloses a method of comparing load information of a base station with that of another base station, and if the load of the another base station is lower than that of the base station, a coverage area of the base station is narrowed to thereby level the loads between the base stations. The load information is the one disclosed in Non-Patent Literature 1. Narrowing the coverage area is, for example, reducing transmission power.

### Citation List

### Patent Literature

Patent Literature 1: International Patent Publication No. WO 2011-149083

### Non Patent Literature

Non Patent Literature 1: 3GPP TS36.423

### Summary of Invention

### Technical Problem

However, there is a problem in the method disclosed in Patent Literature 1 that after a coverage area of the base station is narrowed, when a terminal is handed over to another base station, traffic of the another base station is increased, thereby congesting a backhaul of the another base station.

One of causes of this problem is that it is not possible to take into account a load of the backhaul of the another base station when a load of the base station is changed.

Thus, one of objects to be achieved by exemplary embodiments disclosed in the present specification is to provide a base station, a method, and a program that operate based on a load of a backhaul of another base station when a load of the base station is changed.

### Solution to Problem

A base station according to this exemplary embodiment includes, in a communication system including a first backhaul between the base station and a core network connected to the base station and a second backhaul between an adjacent base station and the core network connected to the adjacent base station:
a calculation unit configured to calculate a load of the second backhaul when a load of the base station is changed; and
a determination unit configured to determine as to whether or not the load of the base station is changed based on a result of the calculation by the calculation unit.

A communication system according to this exemplary embodiment includes:
a first backhaul between a base station and a core network connected to the base station;
a second backhaul between an adjacent base station and the core network connected to the adjacent base station; and
a terminal configured to communicate with the base station.

The base station includes:
a calculation unit configured to calculate a load of the second backhaul when a load of the base station is changed; and
a determination unit configured to determine as to whether or not the load of the base station is changed based on a result of the calculation by the calculation means.

The terminal receives information obtained based on a result of the determination by the base station.

A method for a base station according to this exemplary embodiment in a communication system comprising a first backhaul between the base station and a core network connected to the base station and a second backhaul between an adjacent base station and the core network connected to the adjacent base station, the method comprising steps of:
calculating a load of the second backhaul when a load of the base station is changed; and
determining as to whether or not to change the load of the base station based on a result of the calculation.

A program according to this exemplary embodiment for causing a computer to execute steps, in a communication system comprising a first backhaul between a base station and a core network connected to the base station and a second backhaul between an adjacent base station and the core network connected to the adjacent base station, the steps comprising:
calculating a load of the second backhaul when a load of the base station is changed; and
determining as to whether or not to change the load of the base station based on a result of the calculation.

### Advantageous Effects of Invention

According to the above exemplary embodiments, it is possible to perform an operation, when a load of a base station is changed, based on a load of a backhaul of another base station.

### Brief Description of Drawings

Fig. 1 is a block diagram of a wireless communication system according to a first exemplary embodiment;
Fig. 2 is a block diagram of a base station according to the first exemplary embodiment;
Fig. 3 is a flowchart showing an operation of the base station according to the first exemplary embodiment;
Fig. 4 is a block diagram of a base station according to a second exemplary embodiment;
Fig. 5 is a flowchart showing an operation of the base station according to the second exemplary embodiment;
Fig. 6 is a block diagram of a base station according to a third exemplary embodiment;
Fig. 7 is a flowchart showing an operation of the base station according to the third exemplary embodiment;
Fig. 8 is a block diagram showing an example of a backhaul composed of a plurality of links according to the third exemplary embodiment;
Fig. 9 is a block diagram of a communication system according to a modified example of the third exemplary embodiment;
Fig. 10 is a block diagram of a communication system according to a fourth exemplary embodiment;
Fig. 11 is a block diagram of a base station according to the fourth exemplary embodiment;
Fig. 12 is a block diagram of a management control device according to the fourth exemplary embodiment;
Fig. 13 is a flowchart showing an operation of the management control device according to the fourth exemplary embodiment;
Fig. 14 is a drawing showing an example of load information of respective links;
Fig. 15 is a sequence diagram of an operation in which the management control device transmits load information of a bottleneck link to a base station;
Fig. 16 is a drawing showing an example of information transmitted by the management control device to the base station;
Fig. 17 is a flowchart showing an operation of the base station according to the fourth exemplary embodiment;
Fig. 18 is a sequence diagram showing a resource status reporting process between base stations;
Fig. 19 is an explanatory diagram showing a structure of a resource status request message;
Fig. 20 is an explanatory diagram showing a structure of the resource status update message;
Fig. 21 shows an example in which the base station converts S1 TNL Load received from an adjacent base station into a percentage;
Fig. 22 is an example of a communication system; and
Fig. 23 is a block diagram of a terminal 500 according to respective exemplary embodiments.

### Description of Embodiments

Hereinafter, specific exemplary embodiments will be described in detail with reference to the drawings. In the drawings, the same elements are denoted by the same reference signs, and repeated descriptions are omitted as necessary for clarity of descriptions.

The exemplary embodiments described below may be individually carried out or implemented in an appropriate combination. The exemplary embodiments have novel features that are different from one another. Accordingly, the plurality of exemplary embodiments contribute to solving purposes or undertaking challenge different from one another and contribute to achieving different advantageous effects from one another.

### First Exemplary Embodiment

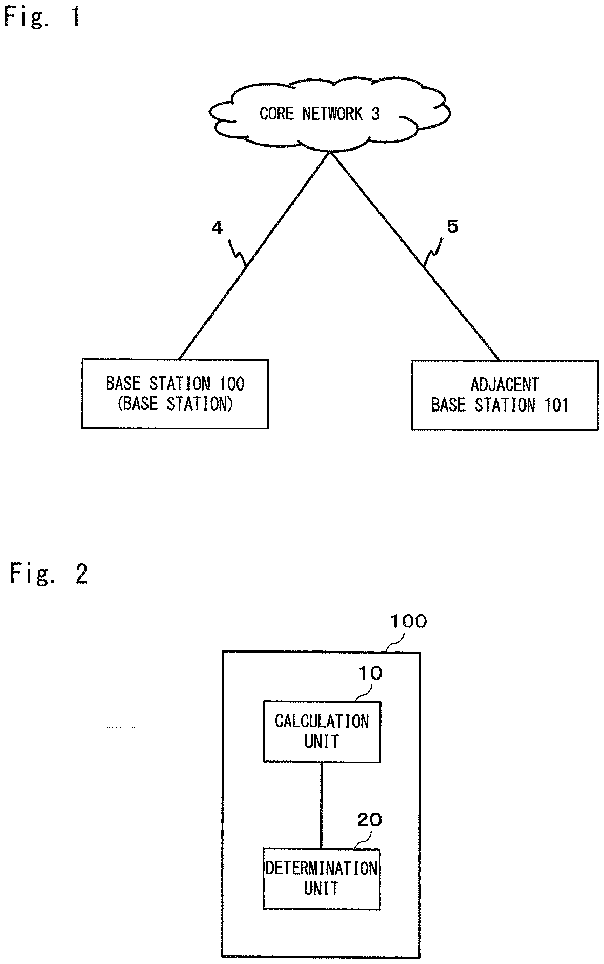

Fig. 1 is a block diagram of a wireless communication system according to this exemplary embodiment. The wireless communication system provides a communication service, for example, one of audio communication and packet data communication or both of them. Referring to Fig. 1, the wireless communication system includes a base station 100, an adjacent base station 101, a core network 3, a backhaul 4, and a backhaul 5. The base station 100 is connected to the core network 3 through the backhaul 4. The adjacent base station 101 is connected to the core network 3 through the backhaul 5.

The adjacent base station 101 may indicate a base station that is adjacent to the base station 100. The base station 100 and the adjacent base station 101 may be connected to each other through an interface such as an X2 interface or the like. For example, the base station 100 and the adjacent base station 101 are a macro cell base station and a femto cell base station, respectively. Femto cell base stations may be arranged in a communication area formed by the macro cell base station to constitute a network called a Heterogeneous Network.

Fig. 2 shows an example of a configuration of the base station 100 according to the first exemplary embodiment.

The base station 100 includes at least a calculation unit 10 and a determination unit 20.

The calculation unit 10 calculates a load of the backhaul 5 that connects the adjacent base station 101 to the core network 3 when a load of the base station 100 is changed.

The determination unit 20 determines as to whether or not to change the load of the base station 100 based on a result of calculation by the calculation unit.

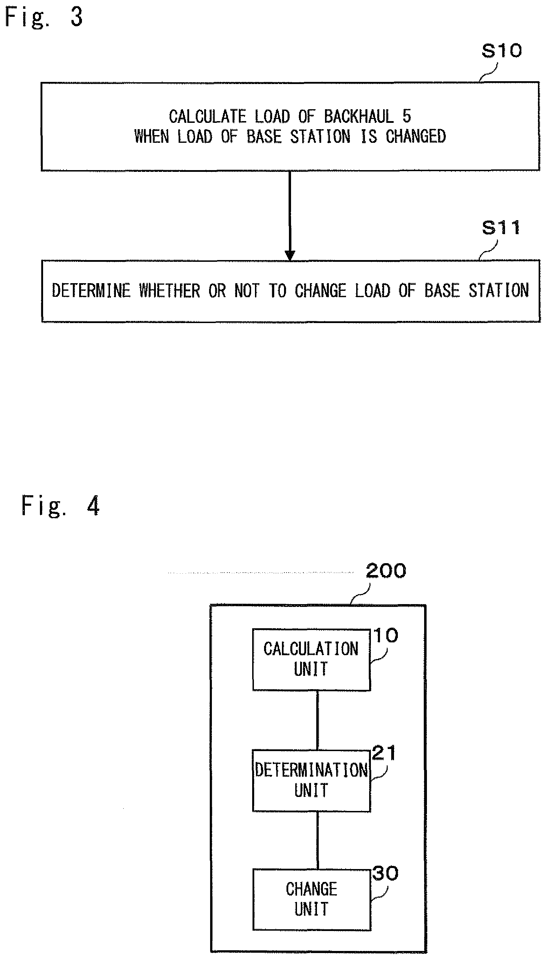

Next, an operation of the base station 100 according to this exemplary embodiment will be described with reference to Fig. 3.

In the step S10, the calculation unit 10 calculates the load of the backhaul 5 when the load of the base station 100 is changed.

In the step S11, the determination unit 20 determines as to whether or not the load of the base station 100 is changed based on a calculation result of the calculation unit.

As described above, the base station 100 according to this exemplary embodiment calculates the load of the backhaul 5 when the load of the base station 100 is changed and determines as to whether or not to change the load of the base station 100 based on the calculation result of the calculation unit. Thus, the base station 100 of this exemplary embodiment achieves an advantage that it is possible to perform an operation, when a load of the base station (the base station 100) is changed, based on a load of a backhaul of another base station.

### Second Exemplary Embodiment

In this exemplary embodiment, a modified example of the abovementioned first exemplary embodiment will be described.

Fig. 4 shows an example of a configuration of a base station 200 according to a second exemplary embodiment.

The base station 200 includes at least a calculation unit 10, a determination unit 21, and a change unit 30. The calculation unit 10 is the same as that of the first exemplary embodiment.

The determination unit 21 determines as to whether or not to change a load of the base station 200 based on a calculation result of the calculation unit.

The change unit 30 changes the load of the base station 200 based on a determination result of the determination unit.

Changing a load includes, for example, changing a size of a coverage area and a position (a position of the coverage area calculated based on latitude and longitude information) of the coverage area, and changing the number of terminals that communicate with a base station. Means for changing the size of the coverage area and the position of the coverage area includes, for example, various means for changing transmission power of a base station, changing an antenna tilt angle and an azimuth, and executing beamforming. Further, means for changing the number of terminals that communicate with a base station includes, for example, various means for handing a terminal over to another base station.

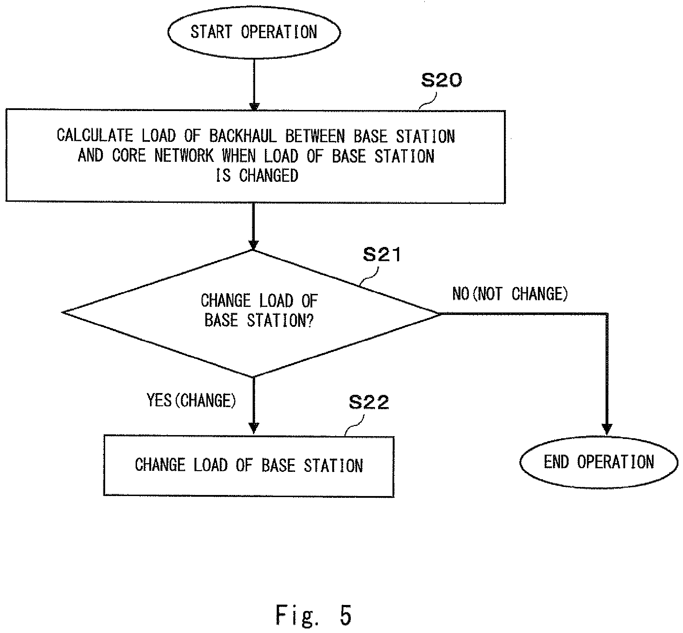

Next, an operation of the base station 200 of this exemplary embodiment will be described with reference to Fig. 5.

The step S20 is the same as the step S10 of the first exemplary embodiment.

In the step S21, the determination unit 21 determines as to whether or not to change the load of the base station 200 based on the calculation result of the calculation unit. If the determination result in the step S21 indicates that "the load of the base station 200 is not changed" (step S21: NO), an operation of the step S22 onward will not be performed, and the operation is ended. As the determination of whether or not to change the load of the base station 200 is made based on the calculation result of the calculation unit in this way, the change unit 30 operates only when the load of the base station 200 needs to be changed. It is thus possible to save power of the base station 200 and reduce the load of the base station 200.

If the determination result in the step S21 indicates that "the load of the base station 200 is changed" (step S21: YES), the change unit 30 changes the load of the base station 200 in the step S22.

In the step S22, the change unit 30 changes the load of the base station 200 based on the determination result in the step S21.

As described above, the base station 200 of this exemplary embodiment changes the load of the base station 200 based on the determination result of the determination unit 21. Thus, according to the base station 200 of this exemplary embodiment, it is possible to change the load of the base station 200 based on the determination result of the determination unit 21.

### Third Exemplary Embodiment

In this exemplary embodiment, a modified example of the abovementioned first and second exemplary embodiments will be described.

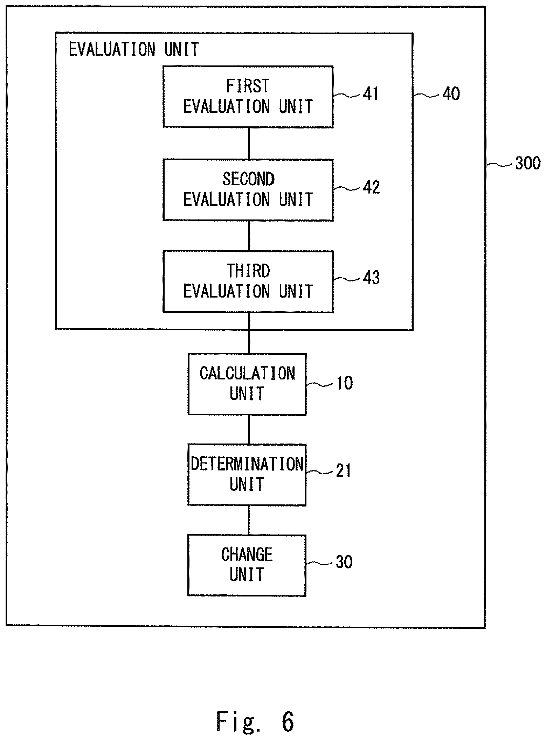

Fig. 6 shows an example of a configuration of a base station 300 according to a third exemplary embodiment.

The base station 300 includes at least a calculation unit 10, a determination unit 21, a change unit 30, and an evaluation unit 40. Note that the calculation unit 10, the determination unit 21, and the change unit 30 are the same as those in the second exemplary embodiment.

The evaluation unit 40 may include a first evaluation unit 41 and one of a second evaluation unit 42 and a third evaluation unit 43 or both of them.

The first evaluation unit 41 evaluates as to whether or not a resource of the base station 100 in Fig. 1 is congested (in this exemplary embodiment, as the base station 100 has functions of the base station 300, the base station 100 will be hereinafter referred to as the base station 300).

The second evaluation unit 42 evaluates as to whether or not the backhaul 4 is congested based on load information of the backhaul 4 that connects the base station 300 to the core network 3.

The third evaluation unit 43 evaluates as to whether or not the backhaul 5 is congested based on load information of the backhaul 5 that connects the adjacent base station 101 to the core network 3 in Fig. 1.

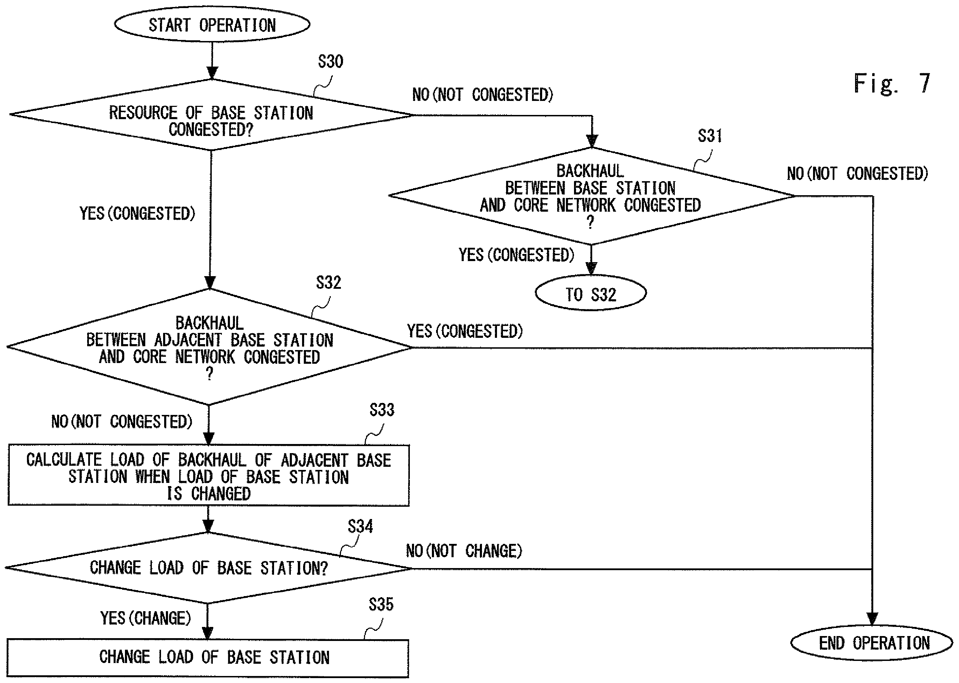

Next, an operation of the base station 300 according to this exemplary embodiment will be described with reference to Fig. 7. Differences between this exemplary embodiment and the abovementioned exemplary embodiments will be mainly described.

In the step S30, the first evaluation unit 41 evaluates as to whether or not the resource of the base station 300 is congested. If the evaluation result in the step S30 indicates that "the resource of the base station 300 is not congested" (step S30: NO), the process is moved to the step S31. On the other hand, if the evaluation result in the step S30 indicates that "the resource of the base station 300 is congested" (step S30: YES), the process is moved to the step S32.

In the step S31, the second evaluation unit 42 evaluates as to whether or not the backhaul 4 is congested based on load information of the backhaul 4 that connects the base station 300 to the core network 3. If the evaluation result in the step S31 indicates that "the backhaul 4 is not congested" (step S31: NO), the operation of the step S32 onward will not be performed, and the operation is ended. In this way, as the operation is performed based on the evaluation result of whether or not the backhaul 4, which connects the base station 300 to the core network 3, is congested, the calculation unit 10 operates only when the calculation is needed. By doing so, it is possible to save power of the base station 300 and reduce a load of the base station 300.

Next, if the evaluation result in the step S31 indicates that the "backhaul 4 is congested" (step S31: YES), the process is moved to the step S32.

In the step S32, the third evaluation unit 43 evaluates as to whether or not the backhaul 5 is congested based on load information of the backhaul 5 that connects the adjacent base station 101 to the core network 3. If the evaluation result in the step S32 indicates that "the backhaul 5 is congested" (step S32: YES), the operation of the step S33 onward will not be performed, and the operation is ended. In this way, as the operation is performed based on the evaluation result of whether or not the backhaul 5, which connects the adjacent base station 101 to the core network 3, is congested, the calculation unit 10 operates only when the calculation is needed. By doing so, it is possible to save power of the base station 300 and reduce a load of the base station 300.

Next, if the evaluation result in the step S32 indicates that "the backhaul 5 is not congested" (step S32: NO), the calculation unit 10 performs an operation of the step S33. Note that the steps S33, S34, and S35 are the same as those in the first and second exemplary embodiments.

Note that this exemplary embodiment may be applied to a case when a backhaul between base stations and a core network is composed of a plurality of links.

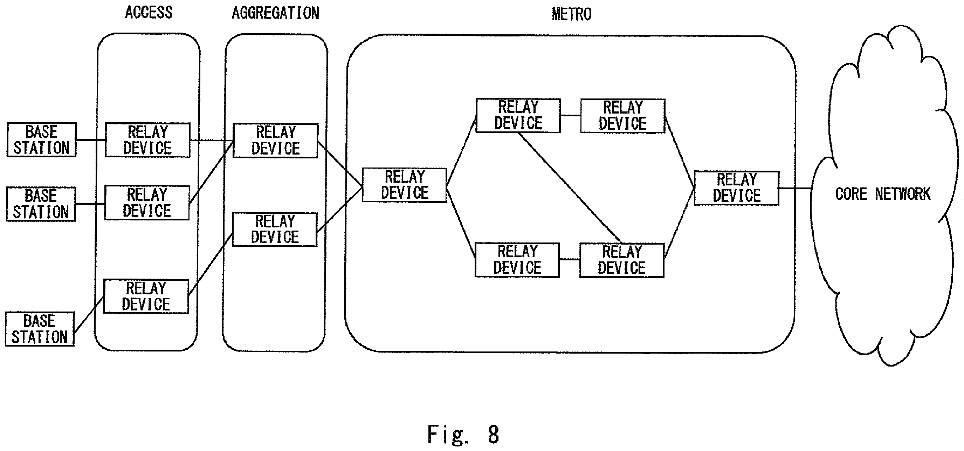

Fig. 8 is a block diagram showing an example of a backhaul composed of a plurality of links. As shown in Fig. 8, the backhaul is composed of a plurality of links categorized as an access link, an aggregation link, and a metro link. The access link accommodates base stations installed in an access region. The aggregation link accommodates a plurality of base stations in the access region and base stations installed in an aggregation region. The metro link is a link in a metro region and transfers data traffic of the plurality of base stations transferred from the aggregation link to the core network.

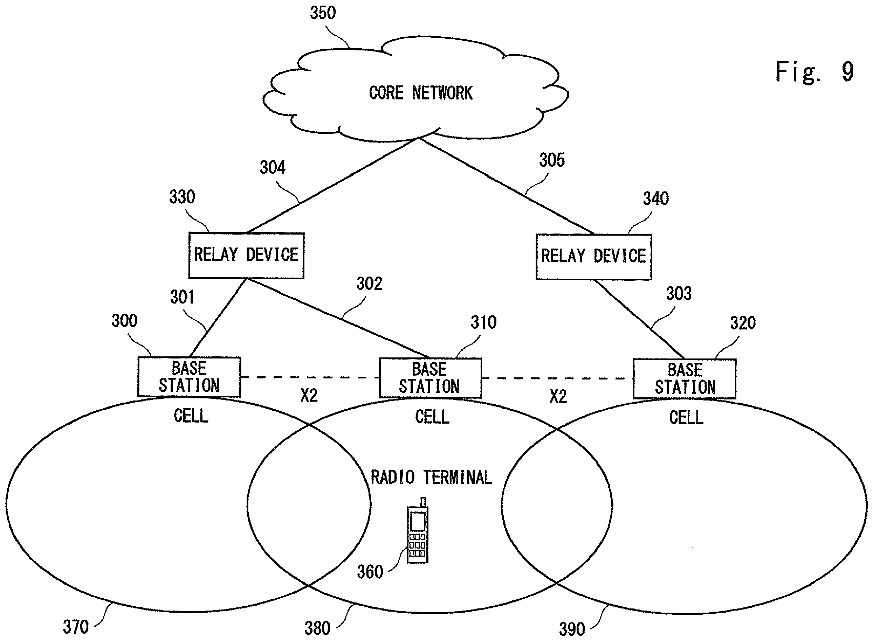

Fig. 9 is a block diagram showing an example of a communication system according to a modified example of this exemplary embodiment.

In the communication system shown in Fig. 9, base stations 300 to 320 are connected to a core network 350 through links 301 to 305 and relay devices 330 and 340. The base stations 300 and 310 are connected to the relay device 330. The base station 320 is connected to the relay device 340. Further, the relay devices 330 and 340 are connected to the core network 350. The base stations 300 and 310 are connected through the X2 interface, and the base stations 310 and 320 are connected through the X2 interface. A terminal 360 camps on a cell 380 of the base station 310.

The link 304 aggregates the links 301 and 302. Therefore, traffic could flow in the link 304 from both of the links 301 and 302.

When the backhaul is composed of a plurality of links, the second evaluation unit 42 and the third evaluation unit 43 may use load information of a link with the highest load in the backhaul that connects a base station to a core network. To be more specific, suppose that a load of the link 304 is higher than that of the link 301 in the backhaul between the base station 300 and the core network 350. In such a case, load information used in the evaluation by the second evaluation unit 42 may be load information of the link 304 in this exemplary embodiment.

The communication system or the base station 300 according to this exemplary embodiment can evaluate as to whether or not to change a load of the base station based on whether or not a backhaul, which connects the base station to a core network, is congested and whether or not a backhaul, which connects an adjacent base station to the core network, is congested not only based on whether or not a resource of the base station 300 is congested. That is, the communication system or the base station 300 according to this exemplary embodiment can accurately evaluate when it is necessary to change the load of the base station and change the load only when it is needed. It is therefore possible to save power of the base station 300.

The communication system or the base station 300 according to this exemplary embodiment can solve the following problem. For example, when a backhaul of the base station 300 is congested, the number of packets reaching the base station 300 is small. Thus, a PRB (Physical Resource Block) utilization could become low and throughputs of terminals camping on a cell (a cell 370 in Fig. 9) of the base station 300 could become low. In this case, the base station 300 will not change transmission power of the base station (the base station 300) as the PRB utilization of the base station is not high. As a result, the throughputs of the terminals camping on the cell 370 are not improved.

The above problem could occur, for example, when an aggregation link (the link 304 in Fig. 9) of the base station 300 and an access link (the link 301 in Fig. 9) of the base station 300 are congested.

In regard to the above problem, the base station 300 of this exemplary embodiment can evaluate as to whether or not the backhaul, which connects the base station to the core network, is congested even when a resource of the base station 300 is not congested. Accordingly, the congestion in the resource of the base station can be eliminated as appropriate. Moreover, as terminals communicating with the base station can be appropriately moved, it is possible to eliminate the congestion in the resource of the base station and the congestion in the backhaul of the base station.

### Fourth Exemplary Embodiment

In this exemplary embodiment, a modified example of the abovementioned first to third exemplary embodiments will be described.

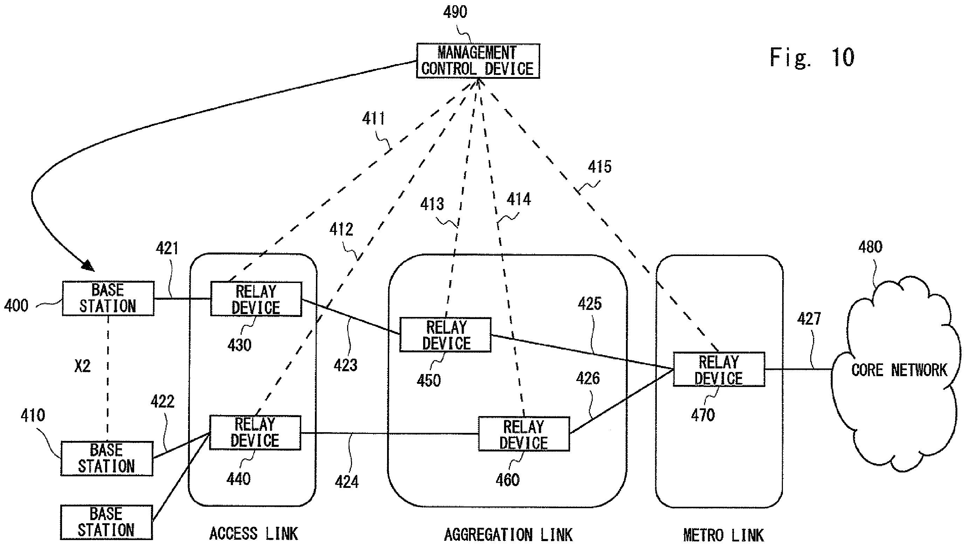

Fig. 10 is a block diagram showing an example of a communication system according to this exemplary embodiment.

In the communication system shown in Fig. 10, base stations 400 and 410 are connected to a core network 480 through links 421 to 427 and relay devices 430 to 470. The base station 400 and the core network 480 are connected through the links 421, 423, 425, and 427. The base station 410 and the core network 480 are connected through the links 422, 424, 426, and 427. Further, in regard to a management control device 490 that manages resources of backhauls and interfaces between the management control device 490 and the respective relay devices, the interfaces should enable the management control device 490 to obtain load information of the respective links 421 to 427. Furthermore, in regard to the interface between the management control device 490 and the base station 400 and the interface between the management control device 490 and the base station 410, the interfaces should enable the base stations 400 and 410 to receive load information of the backhaul. The management control device 490 is, for example, an NMS (Network Management System).

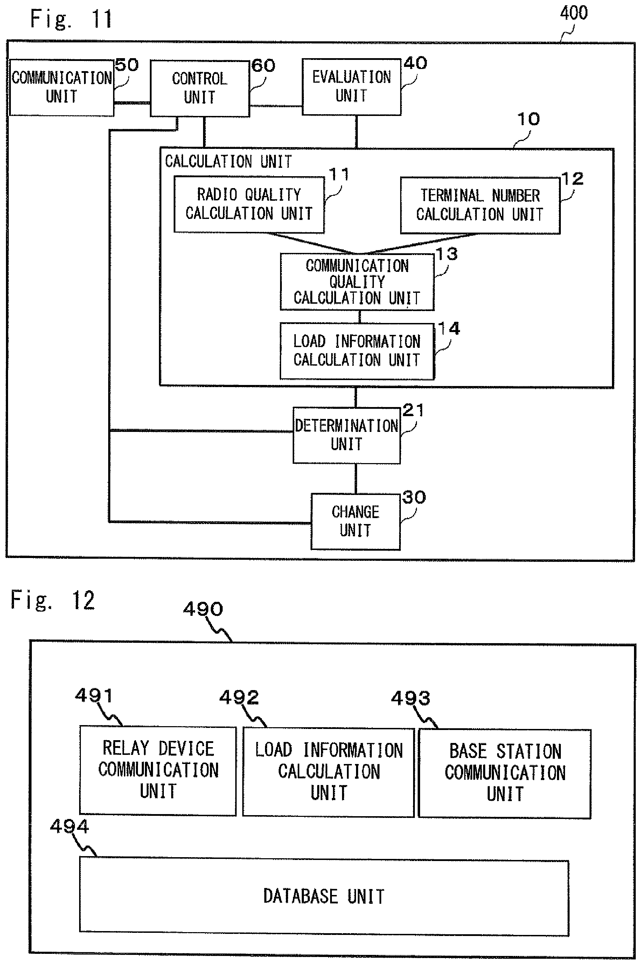

Fig. 11 shows an example of a configuration of a base station 400 according to a fourth exemplary embodiment.

The base station 400 includes at least a calculation unit 10, a determination unit 21, a change unit 30, an evaluation unit 40, a communication unit 50, and a control unit 60. The calculation unit 10 includes at least a radio quality calculation unit 11, a terminal number calculation unit 12, a communication quality calculation unit 13, and a load information calculation unit 14. Note that the change unit 30 and the evaluation unit 40 are the same as those in the third exemplary embodiment.

The radio quality calculation unit 11 uses information related to radio quality reported from terminals connected to the base station (the base station 400) to calculate information related to radio quality of terminals when a load of the base station is changed.

The terminal number calculation unit 12 calculates information related to the numbers of terminals that communicate with the base station and an adjacent base station when the load of the base station is changed.

The communication quality calculation unit 13 calculates information related to throughputs of the respective terminals when the load of the base station is changed.

The load information calculation unit 14 calculates information related to loads of backhauls of the base station and the adjacent base station when the load of the base station is changed.

The determination unit 21 determines as to whether or not to change the load of the base station based on whether or not load information of a bottleneck link of the adjacent base station when the load of the base station is changed exceeds a predetermined value.

The communication unit 50 is connected to an external device wirelessly or by a cable and transmits or receives various information pieces to or from the external device. In this exemplary embodiment, the communication unit 50 receives information related to a load of a link with the highest load in a backhaul, which connects a base station to a core network, from the management control device 490.

The control unit 60 controls the component units included in the base station 400.

Fig. 12 shows an example of a configuration of the management control device 490 according to the fourth exemplary embodiment.

The management control device 490 includes at least a relay device communication unit 491, a load information calculation unit 492, a base station communication unit 493, and a database unit 494.

The relay device communication unit 491 receives load information of the links from respective relay devices (relay devices 430 to 470 in Fig. 10) connected to the management control device 490. Examples of units of the load information include a bit rate (bps and Mbps) and the number of transferred bytes (MB and GB) per unit time.

The load information calculation unit 492 normalizes the load information of the respective links into percentages with respect to physical speeds of the links. Then, the load information calculation unit 492 extracts a link with the highest load between the base station and the core network 480, i.e., a bottleneck link, for each base station.

The base station communication unit 493 transmits, to the base station, load information of the bottleneck link extracted for each base station and load information of a link at a first hop from the base station.

The database unit 494 updates, as necessary, the load information of the respective links for the base station and mapping information between the base station and the core network 480 for the respective links by the relay device communication unit 491 and the base station communication unit 493.

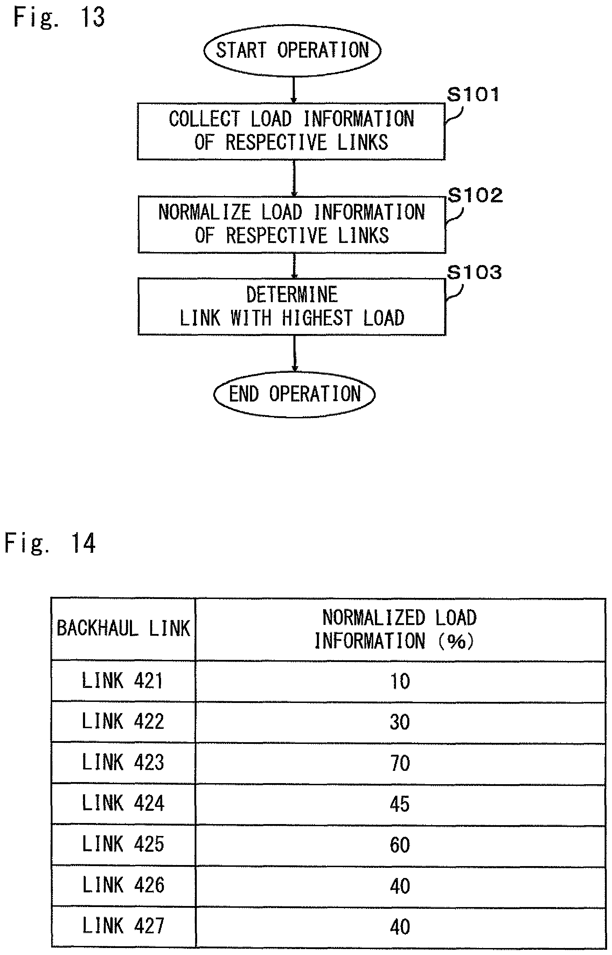

Next, an operation from when the management control device 490 according to this exemplary embodiment collects the load information of the respective links for the base station until the management control device 490 extracts the bottleneck link will be described with reference to Fig. 13.

In the step S101, the management control device 490 collects the load information of the respective links (links 421 to 427 in Fig. 10).

In the step S102, the load information of the respective links is normalized into percentages with respect to the physical speeds of the links. Fig. 14 is a drawing showing an example of the load information of the respective links between the base station 400 and the core network 480 and between the base station 410 and the core network 480. Values shown in Fig. 14 are the load information normalized into percentages.

In the step S103, the link with the highest value of the normalized load information is determined to be a bottleneck link. At this time, the load information calculation unit 492 may extract the link with the highest load among the respective links from the base station to the link at an Nth hop (N is an integer value) as a bottleneck link instead of extracting all the links between the base station and the core network 480.

For example, the load information calculation unit 492 may extract, as a bottleneck link, a link with the highest load among respective links from a base station to a SeGW (Security Gateway), which is an entrance of an operator network, or, for example, among the respective links from the base station to a narrow link, which is relatively congestible, in a backhaul network. For example, the load information calculation unit 492 may extract a link with the highest load among respective links in the access region and the aggregation region.

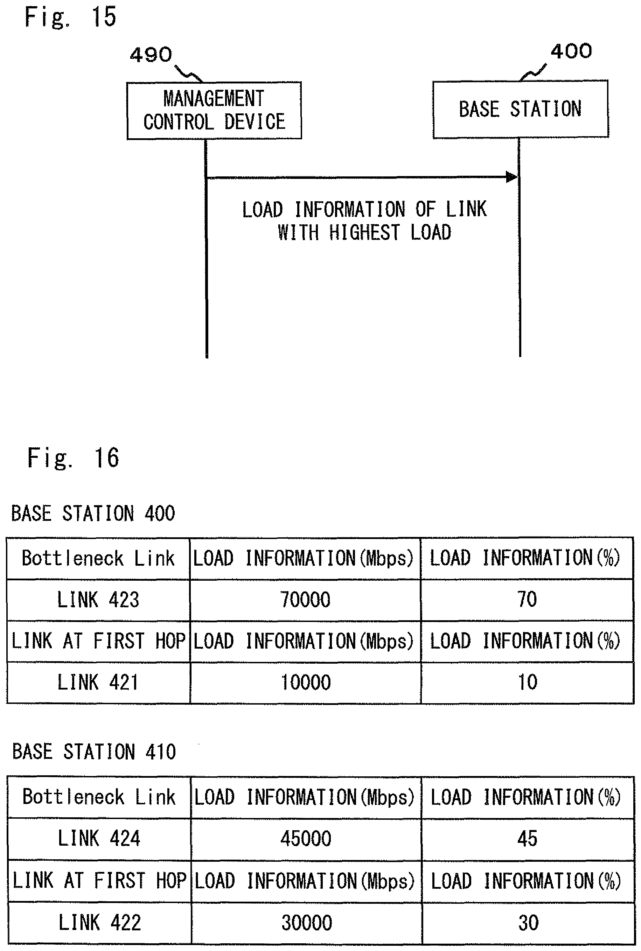

Fig. 15 is a sequence diagram showing an operation in which the management control device 490 transmits the load information of the bottleneck link to the base station 400. At this time, the load information of the link at the first hop from the base station is transmitted as well. Fig. 16 shows an example of the information transmitted by the management control device 490 to the base station 400. In Fig. 16, load information of the bottleneck link and the load information of the link at the first hop from the base station are displayed by the unit of Mbps and percentage.

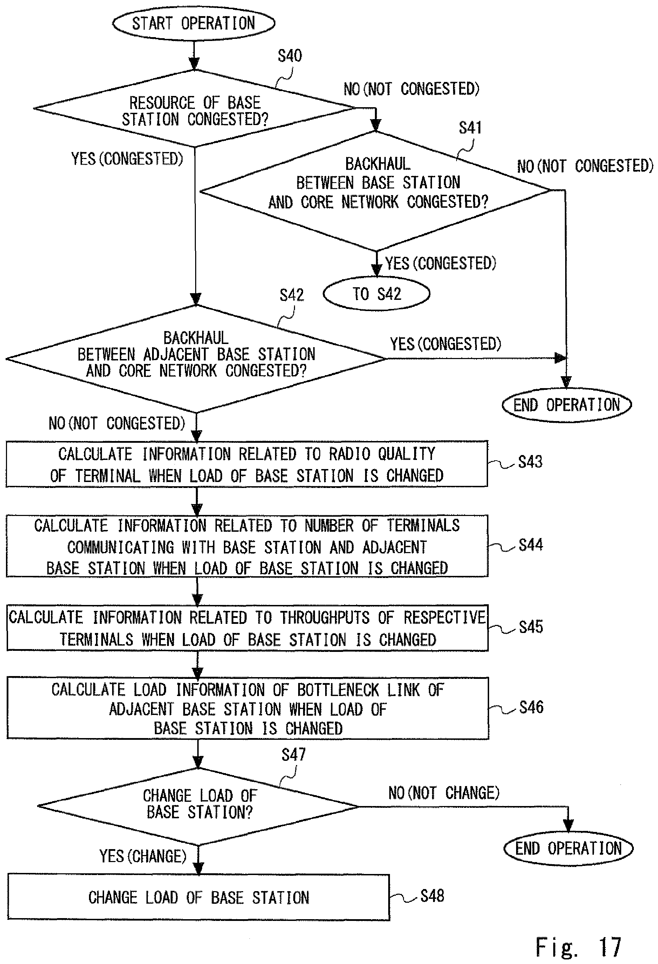

Next, an operation of the base station 400 according to this exemplary embodiment will be described with reference to Fig. 17.

In the step S40, the evaluation unit 40 evaluates as to whether or not a resource of the base station (the base station 400 in Fig. 10) is congested. If the evaluation result in the step S40 indicates that "the resource of the base station is not congested" (step S40: NO), the process is moved to the step S42. On the other hand, if the evaluation result in the step S40 indicates that "the resource of the base station is congested" (step S40: YES), the process is moved to the step S41.

In the step S41, if a value of the load information of the bottleneck link of the base station exceeds a predetermined value (step S41: YES), the evaluation unit 40 determines that a backhaul of the base station 400 is congested and performs a next operation (step S42). If the value of the load information of the bottleneck link of the base station does not exceed the predetermined value (step S41: NO), the operation of the step S42 onward will not be performed, and the operation is ended.

In the step S42, if a value of the load information of the bottleneck link of the adjacent base station 410 that is adjacent to the base station 400 does not exceed a predetermined threshold (step S42: NO), the evaluation unit 40 determines that a backhaul of the adjacent base station 410 is not congested and performs a next operation (step S43). If the value of the load information of the bottleneck link of the adjacent base station 410 exceeds the predetermined value (step S42: YES), the operation of the step S43 onward will not be performed, and the operation is ended.

In the step S43, the radio quality calculation unit 11 instructs terminals to measure radio quality and report it. The radio quality here indicates, for example, RSRP (Reference Signal Received Power). Further, the radio quality calculation unit 11 uses information related to the radio quality measured and reported by the terminals to calculate information related to the radio quality of the terminals when the load of the base station is changed.

In the step S44, the terminal number calculation unit 12 uses the load information of the link at the first hop from the adjacent base station 410 to predict the number of terminals connected to the adjacent base station 410. The terminal number calculation unit 12 assumes that the terminals connected to the respective base stations transmit and receive the same amount of data in average. That is, the terminal number calculation unit 12 assumes that the number of average execution active terminals is proportional to the loads of the links at the first hop from the respective base stations. The number of average execution active terminals indicates an average value of the number of active terminals excluding a time(s) when the number of the active terminals is zero when the number of average active terminals is calculated. For example, the number of average execution active terminals indicates a value obtained by averaging the number of active terminals in a cell measured by a certain time interval (e.g., every one second) in a predetermined period (e.g., for 15 minutes). The number of average active terminals is defined as Layer 2 Measurements in 3GPP TS36.314 ver. 11.1.0.

For example, it is indicated that ten terminals are connected to the base station, the load of the link at the first hop from the base station is 100 Mbps, and the load of the link at the first hop from the adjacent base station 410 is 20 Mbps. As the load of the link at the first hop from the adjacent base station 410 is a load 0.2 times as much as the load of the link at the first hop from the base station, the terminal number calculation unit 12 predicts that the number of terminals connected to the adjacent base station 410 is also the number 0.2 times as many as the number of terminals connected to the base station (predicts that the number of terminals connected to the adjacent base station 410 is two).

In the step S45, the communication quality calculation unit 13 calculates information related to throughputs of the respective terminals camping on the base station when the load of the base station is changed. To be more specific, the communication quality calculation unit 13 calculates communication quality of the terminals based on a calculation result of radio quality of the terminals calculated by the radio quality calculation unit 11 and a calculation result of the number of average execution active terminals for each cell calculated by the terminal number calculation unit 12. The communication quality of the terminal includes, for example, a throughput. The communication quality calculation unit 13 may calculate throughputs of the terminals connected to the adjacent base station before the load of the base station is changed.

In the step S46, the load information calculation unit 14 calculates the load information of the bottlenecks of the base station and the adjacent base station when the load of the base station is changed. To be more specific, the load information calculation unit 14 calculates the load of the adjacent base station when the load of the base station is changed from the communication quality of the terminals calculated by the communication quality calculation unit 13 in the step S13.

In the step S47, if the load information of the bottleneck link of the adjacent base station when the load of the base station is changed, which is calculated in the step S46, does not exceed a predetermined value (step S47: YES), the next process (step S48) is executed. If the load information of the bottleneck of the adjacent base station when the load of the base station is changed exceeds the predetermined value (step S47: NO), the operation of the step S48 onward will not be performed, and the operation is ended. In this way, as the operation is performed based on whether or not the load information of the bottleneck link of the adjacent base station when the load of the base station is changed exceeds the predetermined value, the change unit 30 operates only when the calculation is needed. By doing so, it is possible to save power of the base station 400 and reduce unnecessary movements of the terminals to the adjacent base station 410.

In the step S48, the change unit 30 changes the load of the base station 400 based on the determination result of the determination unit 21.

Note that the base station 400 may operate based on whether or not the load information of the bottleneck link of the base station when the load of the base station is changed exceeds a predetermined value. To be more specific, if the load information of the bottleneck link of the base station when the load of the base station is changed is the predetermined value or less, the base station 400 may determine that a congestion in the bottleneck of the base station can be eliminated by changing the load of the base station and may change the load of the base station.

Further, the base station 400 may receive the load information of the bottleneck link and the link at the first hop shown in Fig. 16 from the adjacent base station 410 instead of from the management control device 490. In this case, a resource status reporting process, i.e., Resource Status Reporting Initiation Procedure described in the technical specification (TS36.423 Version 11.5.0) of 3GPP (3rd Generation Partnership Project), is executed through an X2 link between the base stations.

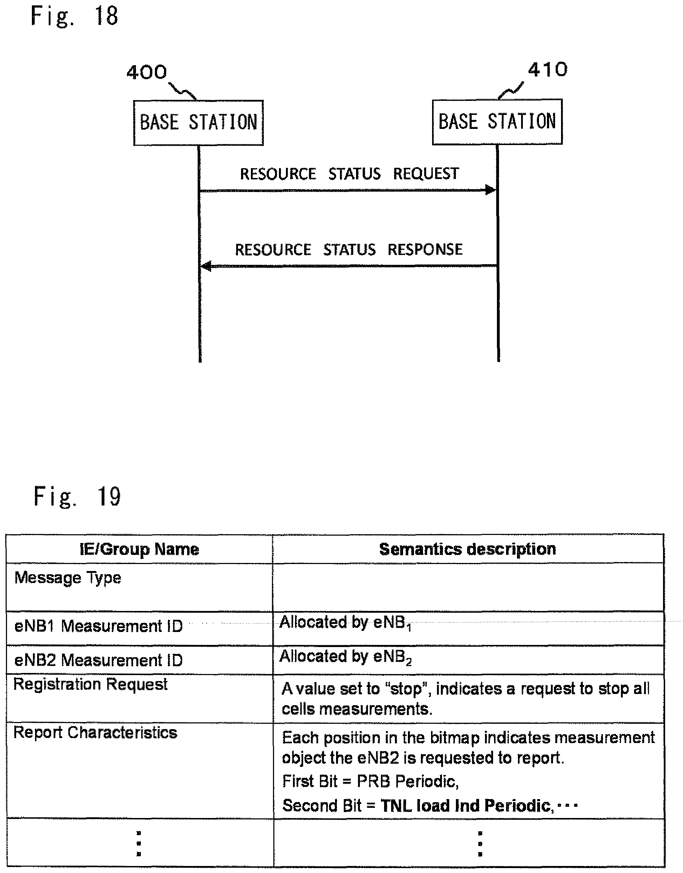

Fig. 18 is a sequence diagram showing the resource status reporting process between base stations. In the resource status reporting process, as shown in Fig. 18, a resource status request message (X2: RESOURCE STATUS REQUEST message) is transmitted from the base station 400 to the adjacent base station 410. Then, a response message (X2: RESOURCE STATUS RESPONSE message) to the resource status request message is transmitted from the adjacent base station 410 to the base station 400.

Fig. 19 is an explanatory diagram showing a structure of the resource status request message. The base station 400 specifies, in the resource status request message, the load information of the adjacent base station 410 that has established the X2 link, as information to be measured. To be more specific, as shown in Fig. 19, the base station 400 specifies "TNL (Transport Network Layer) load Ind Periodic" in a parameter "Report Characteristics (an item to be measured)" of the resource status request message. Thus, the base station 400 can regularly receive the load information of the adjacent base station 410. Note that a maximum of four pieces of load information can be specified in "Report Characteristics". One of them is "TNL load Ind Periodic".

Next, the base station 400 receives a resource status update message (X2: RESOURCE STATUS UPDATE message) from the adjacent base station 410.

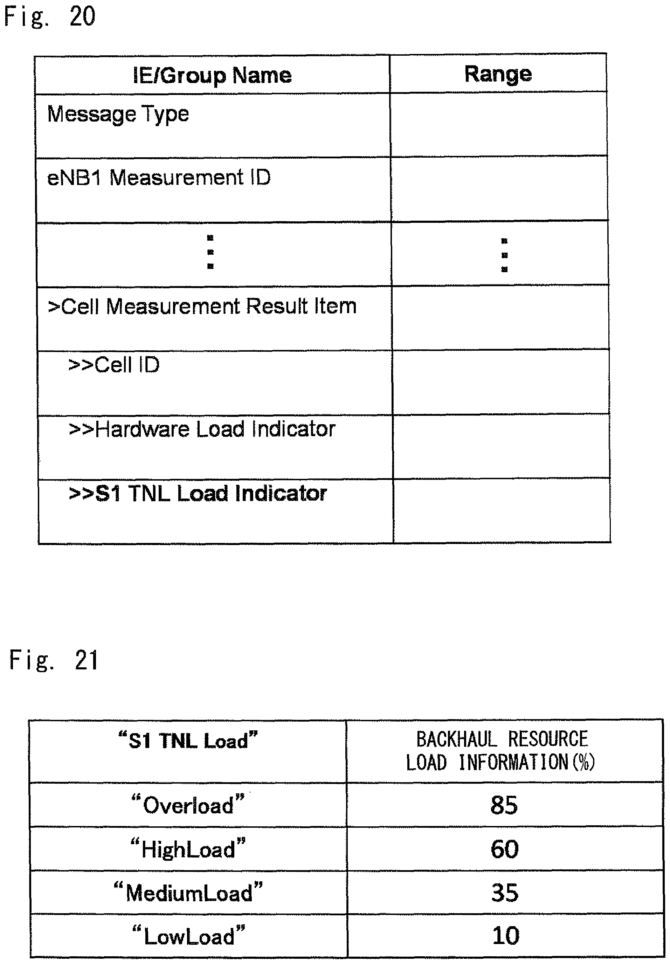

Fig. 20 is an explanatory diagram showing a structure of the resource status update message. The resource status update message received by the base station 400 includes "S1 TNL Load Indicator" as shown in Fig. 20. The "S1 TNL Load Indicator" is load information of an S1 transport network layer (hereinafter referred to as S1 network load information). The S1 network load information indicates a link between the base station and the relay device at the first hop from the base station, i.e., a backhaul resource load of the access link.

In this exemplary embodiment, the base station 400 transmits X2: RESOURCE STATUS RESPONSE message to the adjacent base station 410 and receives X2: RESOURCE STATUS UPDATE message from the adjacent base station 410. Thus, the base station 400 can obtain S1 TNL Load of the adjacent base station 410.

Fig. 21 is an example in which the base station 400 converts the S1 TNL Load received from the adjacent base station 410 into percentages. The base station 400 converts the S1 TNL Load received from the adjacent base station 410 into percentages and starts the operation shown in Fig. 17.

The communication system or the base station 400 according to this exemplary embodiment can solve the following problem.

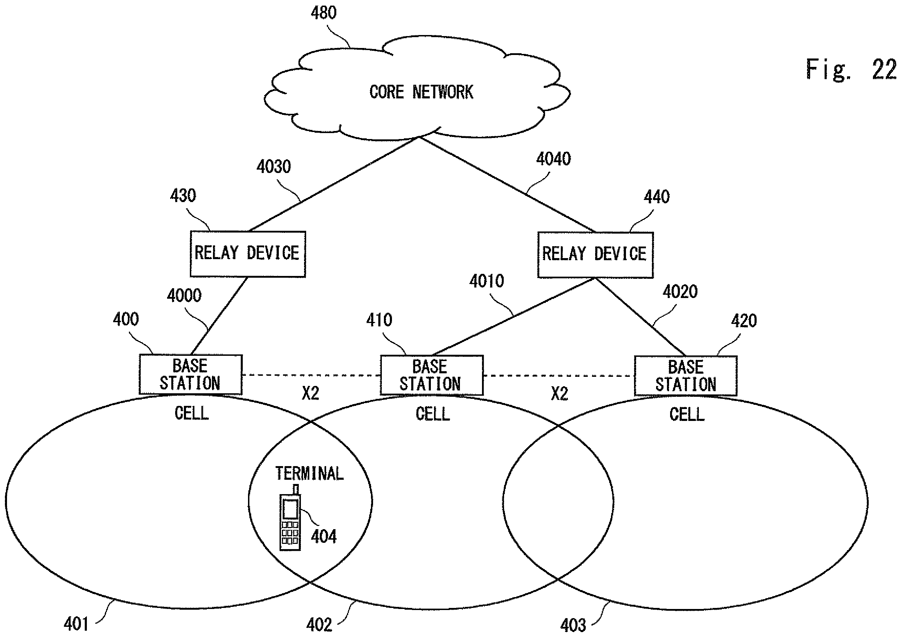

Fig. 22 shows an example of the communication system. For example, when an aggregation link (a link 4040) of base stations 410 and 420 is congested because an amount of traffic data of terminals camping on a cell 403 is large, a PRB utilization could be low and throughputs of terminals camping on the cell 402 could be low as the number of packets reaching the base station 410 is small. However, as the PRB utilization of the cell 402 is not high as seen from the base station 400, the number of radio terminals in the cell 402 is estimated to be small. Thus, if a terminal 404 camping on the cell 401 is moved, a throughput of the terminal 404, which is moved to the cell 402, and throughputs of remaining terminals camping on the cell 401 are expected to improve, and then the transmission power of the base station 400 is reduced. Consequently, as the terminal 404 that has been camping on the cell 401 is moved to the base station 410, an access link and the aggregation link of the base station 410 are further congested, and thus the throughput of the terminal 404, which has been moved to the base station 410, is not improved.

Although the above problem indicates that a congestion occurs in the aggregation link (the link 4040 in Fig. 22) of the base stations 410 and 420, the same problem as the one described above occurs when the access link of the base station 410, i.e., a link 4010, is congested.

In regard to the above problem, the base station 400 according to this exemplary embodiment can assume a status of congestion in a backhaul of the adjacent base station 410 when a terminal connected to the base station 400 is moved to the adjacent base station 410 in order to evaluate as to whether or not to move the terminal. Accordingly, unnecessary movements of the terminals are reduced, thereby reducing signaling involved with the movements (handover etc.) of the terminals. Unnecessary changes of the transmission power of the base station 400 can also be prevented. It is thus possible to reduce loads of the base station 400, the adjacent base station 410, and the entire communication system.

The following problem can also be solved. For example, when a PRB utilization of the cell 401 is high, and the links 4010 and 4040 of the adjacent cell 402 are not congested, the base station 400 expects that the throughput of the terminal 404, which has been moved to the cell 402, and throughputs of the remaining terminals camping on the cell 401 will improve and reduces its transmission power to thereby move the terminal 404 to the cell 402. However, when the terminal 404 camps on the cell 402, traffic of the links 4010 and 4040 is increased. The increase in the traffic of the links 4010 and 4040 could cause congestion in the link 4040, which is the aggregation link. If the link 4040 is congested, the throughput of the terminal 404, which has been moved to the cell 402, will not improve, and the throughputs of the terminals that are originally camping on the cell 402 may deteriorate.

Although the above problem indicates that congestion occurs in the link 4040, which is the aggregation link of the base station 410, because the terminal 404 camps on the cell 402, the same problem as the one described above occurs when the access link of the base station 410, i.e., the link 4010, is congested.

In regard to the above problem, the base station 400 according to this exemplary embodiment can assume a status of congestion in the backhaul of the adjacent base station 410 when a terminal connected to the base station 400 is moved to the adjacent base station 410 in order to evaluate as to whether or not to move the terminal. Accordingly, unnecessary movements of the terminals are reduced, thereby reducing signaling involved with the movements (handover etc.) of the terminals. Unnecessary changes of the transmission power of the base station 400 can also be prevented. It is thus possible to reduce loads of the base station 400, the adjacent base station 410, and the entire communication system.

The configuration of the calculation unit 10 in Fig. 11 of the above exemplary embodiment may be incorporated into a control device. The control device may be a device such as an MME (Mobility Management Entity), an EMS (Element Management System), a HeNB-GW (Home evolved Node B Gate Way), or the like. When the calculation unit 10 is incorporated into such a control device, the calculation unit 10 may be configured to notify the base station of a calculation result.

Although in the above exemplary embodiments, the management control device 490 transmits the load information of the bottleneck link and the load information of the link at the first hop from the base station to the base station 400, the management control device 490 may transmit the load information to the control device.

Further, load information (a hardware utilization, a CP utilization, and a memory utilization, etc.) of intermediate devices (a router, a switch, etc.) installed between a base station and a core network may be used in place of the load information of the backhaul between the base station and the core network.

The processes of the abovementioned exemplary embodiments may be executed by software. That is, a computer program for executing the processes may be read by a CPU (Central Processing Unit) included in a communication device so that the computer program will be executed. The same processes as those described in the above exemplary embodiments can be executed by using the program that executes the processes. The above program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

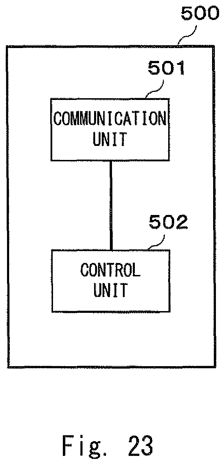

A terminal may execute a handover according to the respective processes of the abovementioned exemplary embodiments. Fig. 23 shows an example of a terminal 500 according to respective exemplary embodiments.

The terminal 500 includes at least a communication unit 501 and a control unit 502. The communication unit 501 is connected to an external device wirelessly or by a cable and transmits or receives various information pieces to or from the external device. The communication unit 501 may receive information from each of the component units of the base station of the exemplary embodiments. The control unit 502 controls the component units included in the terminal 500.

The whole or part of the exemplary embodiments disclosed above can be described as, but not limited to, the following supplementary notes.

In addition, the term cell as used in the specification and claims may, at different times, mean a base station, a coverage area, a sector, or a combination thereof.

Further, the term base station as used in the specification and claims may, at different times, mean an eNB (evolved Node B), a HeNB (Home evolved Node B), other information processing devices, or a combination thereof.

Although the present invention has been described with reference to the exemplary embodiments, the present invention is not limited by the above. Various modifications that can be understood by those skilled in the art may be made to configurations and details of the present invention within the scope of the invention. The whole or part of the exemplary embodiments disclosed above can be described as, but not limited to, the following supplementary notes.

### (Supplementary note 1)

A base station comprising, in a communication system comprising a first backhaul between the base station and a core network connected to the base station and a second backhaul between an adjacent base station and the core network connected to the adjacent base station,
a calculation unit configured to calculate a load of the second backhaul when a load of the base station is changed; and
a determination unit configured to determine as to whether or not the load of the base station is changed based on a result of the calculation by the calculation unit.

### (Supplementary note 2)

The base station according to Supplementary note 1, further comprising a change unit configured to change the load of the base station based on the determination.

### (Supplementary note 3)

The base station according to Supplementary note 2, wherein the load of the base station is changed by changing a coverage area of the base station.

### (Supplementary note 4)

The base station according to any one of Supplementary notes 1 to 3, wherein the load of the base station is a load of the first backhaul.

### (Supplementary note 5)

The base station according to Supplementary note 4, further comprising a first evaluation unit configured to evaluate as to whether or not the first backhaul is congested based on first information related to a link with a highest load in the first backhaul, wherein the base station determines as to whether or not to execute the calculation based on a result of the evaluation by the evaluation unit.

### (Supplementary note 6)

The base station according to Supplementary note 4 or 5, further comprising a second evaluation unit configured to evaluate as to whether or not the second backhaul is congested based on second information related to a link with a highest load in the second backhaul, wherein the base station determines as to whether or not to execute the calculation based on a result of the evaluation by the evaluation unit.

### (Supplementary note 7)

The base station according to Supplementary note 6, wherein the base station calculates information related to the number of terminals communicating with the base station when the load of the base station is changed based on third information related to a backhaul load of a backhaul link at a first hop from the base station.

### (Supplementary note 8)

The base station according to Supplementary note 7, wherein the base station calculates information related to radio quality of a terminal when the load of the base station is changed.

### (Supplementary note 9)

The base station according to Supplementary note 8, wherein the base station calculates information related to a throughput of the terminal when the load of the base station is changed based on the information related to the number of terminals and the information related to the radio quality.

### (Supplementary note 10)

The base station according to Supplementary note 9, wherein the base station calculates the first load based on the information related to the throughput of the terminal.

The present application claims priority rights of and is based on Japanese Patent Application No. 2014-172116 filed on August 27, 2014 in the Japanese Patent Office, the entire contents of which are hereby incorporated by reference.

### Reference Signs List

3, 350, 480 CORE NETWORK
4, 5, 301 to 305, 421 to 427, 4000, 4010, 4020, 4030, 4040 LINK IN BACKHAUL
10 CALCULATION UNIT
11 RADIO QUALITY CALCULATION UNIT
12 TERMINAL NUMBER CALCULATION UNIT
13 COMMUNICATION QUALITY CALCULATION UNIT
14 LOAD INFORMATION CALCULATION UNIT
20 DETERMINATION UNIT
30 CHANGE UNIT
40 EVALUATION UNIT
41 FIRST EVALUATION UNIT
42 SECOND EVALUATION UNIT
50, 601 COMMUNICATION UNIT
60, 602 CONTROL UNIT
100, 200, 300, 310, 320, 400, 410, 420 BASE STATION
101 ADJACENT BASE STATION
330 to 340, 430, 440 RELAY DEVICE
360, 404, 600 TERMINAL
370 to 390, 401 to 403 CELL
490 MANAGEMENT CONTROL DEVICE
491 RELAY DEVICE COMMUNICATION UNIT
492 LOAD INFORMATION CALCULATION UNIT
493 BASE STATION COMMUNICATION UNIT
494 DATABASE UNIT

## Claims

1. A base station comprising, in a communication system comprising a first backhaul between the base station and a core network connected to the base station and a second backhaul between an adjacent base station and the core network connected to the adjacent base station,
calculation means for calculating a load of the second backhaul when a load of the base station is changed; and
determination means for determining as to whether or not the load of the base station is changed based on a result of the calculation by the calculation means.

2. The base station according to Claim 1, further comprising change means for changing the load of the base station based on the determination.

3. The base station according to Claim 2, wherein the load of the base station is changed by changing a coverage area of the base station.

4. The base station according to any one of Claims 1 to 3, wherein the load of the base station is a load of the first backhaul.

5. The base station according to Claim 4, further comprising first evaluation means for evaluating as to whether or not the first backhaul is congested based on first information related to a link with a highest load in the first backhaul, wherein the base station determines as to whether or not to execute the calculation based on a result of the evaluation by the first evaluation means.

6. The base station according to Claim 4 or 5, further comprising second evaluation means for evaluating as to whether or not the second backhaul is congested based on second information related to a link with a highest load in the second backhaul, wherein the base station determines as to whether or not to execute the calculation based on a result of the evaluation by the second evaluation means.

7. The base station according to any one of Claims 1 to 6, wherein the determination means determines that the load of the base station is changed if load information of a bottleneck link of the second backhaul when the load of the base station is changed does not exceed a predetermined value.

8. A communication system comprising:
a first backhaul between a base station and a core network connected to the base station; and
a second backhaul between an adjacent base station and the core network connected to the adjacent base station, wherein the base station comprises:
calculation means for calculating a load of the second backhaul when a load of the base station is changed; and
determination means for determining as to whether or not the load of the base station is changed based on a result of the calculation by the calculation means, wherein
a terminal receives information obtained based on a result of the determination by the base station.

9. A method for a base station in a communication system comprising a first backhaul between the base station and a core network connected to the base station and a second backhaul between an adjacent base station and the core network connected to the adjacent base station, the method comprising:
calculating a load of the second backhaul when a load of the base station is changed; and
determining as to whether or not to change the load of the base station based on a result of the calculation.

10. A non-transitory computer readable medium storing a program for causing a computer to execute a method for a base station in a communication system comprising a first backhaul between the base station and a core network connected to the base station and a second backhaul between an adjacent base station and the core network connected to the adjacent base station, the method comprising:
calculating a load of the second backhaul when a load of the base station is changed; and
determining as to whether or not to change the load of the base station based on a result of the calculation.
